# EUROPÄISCHE PATENTSCHRIFT

(11) **EP 0 824 993 B1**
(45) Veröffentlichungstag und Bekanntmachung des Hinweises auf die Patenterteilung: **17.04.2002**
(21) Anmeldenummer: 97114160.1
(22) Anmeldetag: 16.08.1997
(51) Int. Cl.: B23P 13/02, B23B 5/28, C21D 9/34, B23Q 3/18, B60B 17/00

(54) **Verfahren zum Herstellen eines an seiner Lauffläche gehärteten Schienenrades aus Stahl**
Method for manufacturing a steel railroad wheel with hardened running surface
Procédé de fabrication d'une roue ferroviaire en acier, avec une surface de roulement trempée

(30) Priorität: 21.08.1996 DE 19633596
(43) Veröffentlichungstag der Anmeldung: 25.02.1998
(73) Patentinhaber: Bochumer Verein Verkehrstechnik GmbH, 44793 Bochum (DE)
(72) Erfinder: Schneider, Jürgen, Dr. Ing., 44797 Bochum (DE); Murawa, Franz Dipl. Ing., D-44805 Bochum (DE)
(74) Vertreter: Cohausz & Florack

(56) Entgegenhaltungen:
- EP-A- 0 116 359
- DE-A- 4 238 787
- US-A- 3 369 555
- US-A- 4 597 143
- DATABASE WPI Section PQ, Week 9146 Derwent Publications Ltd., London, GB; Class P52, AN 91-337585 XP002049457 -& SU 1 613 231 A (RAILWAY TRANSPORT INST) , 15.Dezember 1990
- DATABASE WPI Section PQ, Week 8145 Derwent Publications Ltd., London, GB; Class P54, AN 81-L6661D XP002049458 -& SU 804 210 A (FERROUS METALLURGY INST) , 15.Februar 1981

## Beschreibung

Schienenräder werden üblicherweise durch Schmieden eines erwärmten Rohlings, Härten der Lauffläche und anschließender spanabhebender Bearbeitung der gesamten Oberfläche hergestellt. Bei der spanabhebenden Bearbeitung erhält das Rad auch die für einen einwandfreien Lauf erforderliche Rundheit und Koaxialität zur Radnabe.

Das Härten der Lauffläche erfolgt bei einem bekannten, in der Praxis üblichen Verfahren in der Weise, daß das geschmiedete Rad nach Erwärmen auf Härtungstemperatur mit seiner Spurkranzseite nach oben flachliegend durch Wasser kontrolliert abgekühlt wird. Dabei wird das Kühlwasser von ortfesten Düsen, an denen das Rad mit der Lauffläche unter Ausführung einer Eigenrotation vorbeibewegt wird, auf die Lauffläche des Rades kontrolliert aufgesprüht. Bei dieser Eigenrotation ist es an einer dem Spurkranz abgewandten Seite innenseitig am Radkranz aufgespannt. Die spätere spanabhebende Bearbeitung insbesondere der Lauffläche erfolgt bei unten liegendem Spurkranz unter Aufspannung des Rades an der Spurkranzseite.

In der Praxis hat sich nun gezeigt, daß die so hergestellten Schienenräder während des Fahrbetriebes unrund werden. Diese Schienenräder müssen dann aus dem Verkehr gezogen und bearbeitet werden.

Der Erfindung liegt die Aufgabe zugrunde, ein Verfahren zum Herstellen eines an seiner Lauffläche gehärteten Schienenrades zu schaffen, das gegen Unrundwerden im Fahrbetrieb widerstandsfähiger ist.

Diese Aufgabe wird erfindungsgemäß durch folgende Verfahrensschritte beim Herstellen eines Schienenrades gelöst:
- das auf Härtungstemperatur erwärmte Rad wird mit seiner Spurkranzseite nach oben flachliegend und auf seiner spurkranzabgewandten Seite innenseitig am Radkranz radial aufgespannt mit einem aus stationären Düsen auf seine Lauffläche aufgesprühten Kühlmedium bei Drehung gegenüber den Düsen auf seinem gesamten Umfang kontrolliert abgekühlt,
- bei gleicher Aufspannung an der spurkranzabgewandten Seite wird an der spurkranzseitigen Innenseite des Radkranzes ein umlaufender Spannansatz unter Rotation des Rades eingearbeitet,
- bei neuer Aufspannung am spurkranzseitigen Spannansatz wird die Lauffläche und gegebenenfalls weitere Oberflächen unter Rotation des Rades abtragend bearbeitet.

Die Erfindung beruht auf der Erkenntnis, daß eine Ursache für das Unrundwerden der Lauffläche im Fahrbetrieb eine über den Umfang ungleichmäßig gehärtete Lauffläche ist. Bei dem bekannten Verfahren erfolgte nämlich die spanabhebende Bearbeitung der Lauffläche nicht gezielt konzentrisch zu dem kontrollierten Abkühlen der Lauffläche, weil die Aufspannung beim Abkühlen und beim spanabhebenden Bearbeiten der Oberfläche nicht auf derselben Referenz, d.h. der Innenseite des Radkranzes an der spurkranzabgewandten Radseite, basierte. Bei der Erfindung dagegen wird ein Spannansatz an der Spurkranzseite für die spanabtragende Bearbeitung der Lauffläche geschaffen, der von der Referenz bei der kontrollierten Abkühlung, nämlich von der Innenseite des Radkranzes auf der spurkranzabgewandten Seite, ausgeht. Deshalb ergibt sich über den gesamten Umfang der Lauffläche bei über den gesamten Umfang gleichen radialen Gradienten der Härtung eine gleichmäßige Abtragung, so daß in jeden Fall gewährleistet ist, daß die Lauffläche über den Umfang an jedem Umfangspunkt den gleichen Härtegrad aufweist. Damit sind gute Voraussetzungen für eine lange Laufzeit bei Rundheit der Lauffläche gegeben.

Nach einer Ausgestaltung der Erfindung wird bei Aufspannung des Rades an dem spurkranzseitigen Spannansatz an der spurkranzabgewandten Innenseite des Radsatzes eine umlaufende Referenzfläche und/oder Montagefläche eingedreht. Diese Referenzfläche dient der optischen Kontrolle der Rundheit des Rades und gegebenenfalls als Montagefläche für die Anbringung von Resonanzabsorbern oder Montageringen für solche Resonanzabsorber.

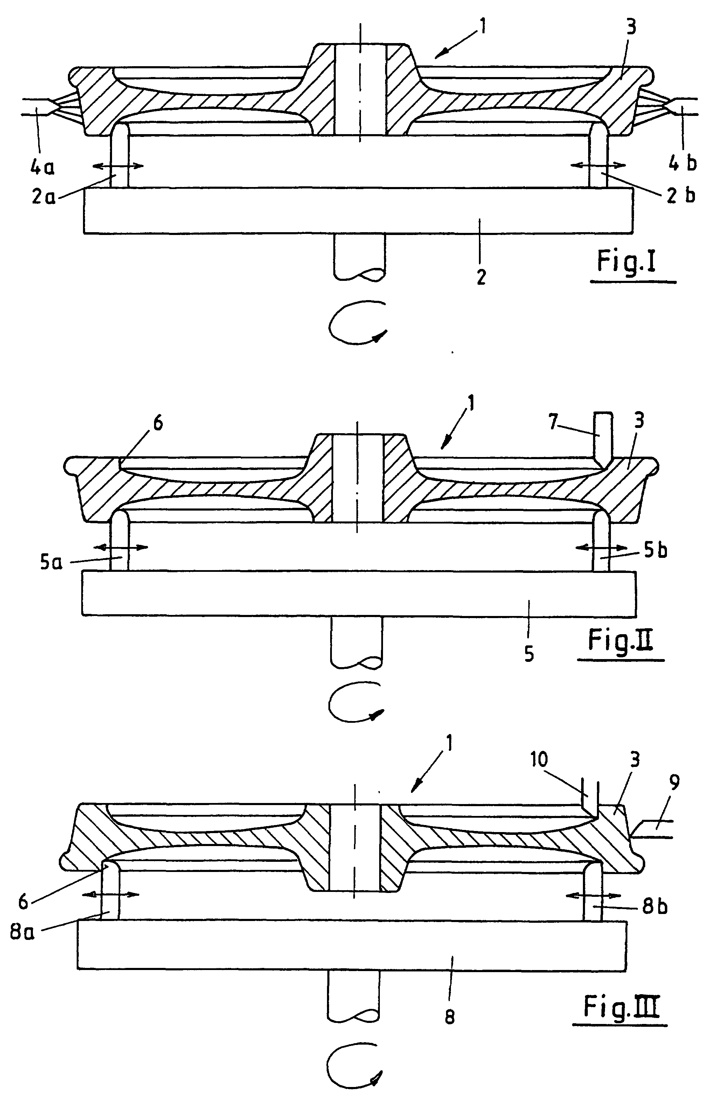

Im folgenden wird die Erfindung anhand einer Zeichnung näher erläutert. Die Zeichnung zeigt schematisch die aufeinanderfolgenden Verfahrensschritte bei der Herstellung des Rades.

Nach dem Schmieden des Radrohlings wird dieser in einem Walzwerk fertiggewalzt, wobei durch das Walzen des Radkranzes mit einer äußeren, Lauffläche und Spurkranz überdeckenden Walze und zwei unterhalb der Lauffläche an der spurkranzseitigen Radkranzinnenkontur angreifenden Walzen eine gleichmäßige Radkranzdicke des rohen Rades erzielt wird.

Im Verfahrensschritt I des Herstellungsverfahrens liegt das geschmiedete, auf ca. 800°C erwärmte Schienenrad 1 aus Stahl mit seiner Spurkranzseite nach oben auf einer Spann- und Drehvorrichtung 2. Dabei erfaßt die Spann- und Drehvorrichtung 2 mit Klauen 2a, 2b das Rad 1 am Radkranz 3 innenseitig. Auf die Lauffläche des Radkranzes 3 sind ortsfeste Sprühdüsen 4a, 4b gerichtet, die ein Sprühmedium, insbesondere Kühlwasser, auf die Lauffläche aufsprühen. Bei diesem Aufsprühen wird das Rad durch die Spann- und Drehvorrichtung 2 gegenüber den Sprühdüsen 4a, 4b gedreht. Dabei findet eine Härtung des Radkranzes 3 ausgehend von deren Lauffläche statt. Der radiale Gradient der Härtung wird vom Abstand der Düsen 4a, 4b von der noch rohen Lauffläche beeinflußt.

Nach dieser Härtung der Lauffläche wird das Rad 1 von der Spann- und Drehvorrichtung 2 abgenommen, und man läßt es erkalten. Anschließend erfolgt noch ein Anlaßprozeß, d.h. das gesamte Rohr wird im Ofen auf Anlaßtemperatur von ca. 550°C aufgeheizt und einen bestimmten Zeitraum gehalten, und anschließend läßt man es erneut erkalten.

Im Verfahrensschritt II des Herstellungsverfahrens wird das Rad 1 erneut von einer Spann- und Drehvorrichtung 5 auf der spurkranzabgewandten Seite aufgespannt. Dabei erfassen Spannklauen 5a, 5b das Rad 1 wieder an der Innenseite des Radkranzes 3. Bezüglich des radialen Härtungsgradienten ergeben sich deshalb die gleichen Verhältnisse wie im Verfahrensschritt I. In dieser Aufspannung erfolgt dann durch spanabhebende Bearbeitung an der spurkranzseitigen Innenseite des Radkranzes 3 die Herstellung eines Spannansatzes 6, der konzentisch zur Aufspannung durch die Spann- und Drehvorrichtungen 2 und 5 liegt. Damit ergeben sich für diesen Spannansatz 6 und das dazugehörige Werkzeug 7 in bezug auf den radialen Härtungsgradienten die gleichen Verhältnisse (Referenz) wie im Verfahrensschritt I. Gleichzeitig erfolgt hierbei eine Bearbeitung der spurkranzseitigen Oberflächen des Rades, d.h. Radkranzstirnseite, Radnabe und gegebenenfalls Radscheibe.

Im Verfahrensschritt III des Herstellungsverfahrens erfolgt die Aufspannung des Rades 1 von der Spurkranzseite aus mittels einer Spann- und Drehvorrichtung 8, die das Rad 1 mittels Klauen 8a, 8b an dem neugeschaffenen Spannansatz 6 erfaßt. In diesem Schritt des Herstellungsverfahrens erfolgt dann die spanabhebende Endbearbeitung der Oberflächen des Rades, insbesondere der gehärteten Lauffläche, mittels eines spanabhebenden Werkzeuges 9, 10.

Wegen des Spannansatzes 6, der von der ursprünglichen Aufspannung ausgeht, wird der eventuell unterschiedliche radiale Härtungsgradient von der rohen Lauffläche ausgehend berücksichtigt. Durch die Laufflächenbearbeitung mittels des Werkzeuges 9 wird deshalb der Lauffläche eine Rundheit gegeben, bei der an der Lauffläche auf dem gesamten Umfang der gleiche Härtegrad vorliegt, selbst wenn bei dieser spanabhebenden Bearbeitung von der rohen Lauffläche ausgehend unterschiedliche Materialabträge erfolgen.

Bei der Aufspannung im Schritt III erfolgt dann auch noch die Bearbeitung der übrigen Oberflächen und insbesondere der Nabenbohrung, die dann auch konzentrisch zur Lauffläche liegt.

## Patentansprüche

1. Verfahren zum Herstellen eines an seiner Lauffläche gehärteten Schienenrades aus Stahl mit folgenden Verfahrensschritten:
- das auf Härtungstemperatur erwärmte Rad wird mit seiner Spurkranzseite nach oben flachliegend und auf der spurkranzabgewandten Seite innenseitig am Radkranz radial aufgespannt mit einem aus stationären Düsen auf seine Lauffläche aufgesprühten Kühlmedium bei Drehung gegenüber den Düsen auf seinem gesamten Umfang kontrolliert abgekühlt,
- bei gleicher Aufspannung an der spurkranzabgewandten Seite wird an der spurkranzseitigen Innenseite des Radkranzes ein umlaufender Spannansatz unter Rotation des Rades eingearbeitet,
- bei neuer Aufspannung am spurkranzseitigen Spannansatz wird die Lauffläche und gegebenenfalls weitere Oberflächen des Rades unter Rotation des Rades abtragend bearbeitet.

2. Verfahren nach Anspruch 1,
**dadurch gekennzeichnet, daß** bei Aufspannung am spurkranzseitigen Spannansatz an der spurkranzabgewandten Innenseite des Radkranzes eine umlaufende Referenzfläche und/oder Montagefläche eingedreht wird.

3. Verfahren nach Anspruch 1 oder 2, **dadurch gekennzeichnet, daß** von einem geschmiedeten Radrohling ausgegangen wird, der durch Walzen eine über seinen gesamten Umfang gleiche Radkranzdicke erhalten hat.

## Claims

1. A method of manufacturing a steel rail wheel hardened at its running tread with the following process steps:
- the wheel heated to the hardening temperature is mounted radially on the wheel rim with its wheel flange side facing upward while lying flat and on the side facing away from the wheel flange on the inside and is cooled in a controlled manner by spraying cooling medium from stationary nozzles on its running tread over its entire circumference,
- with the same mounting on the side facing away from the wheel flange, a peripheral mounting shoulder is worked on the inside of the wheel rim on the side of the wheel flange with rotation of the wheel,
- with a new mounting on the mounting shoulder on the wheel flange side, the running tread and optionally other surfaces of the wheel are machined by removal of material with rotation of the wheel.

2. A method according to claim 1, **characterized in that** with a mounting on the mounting shoulder on the side facing away from the wheel flange, a peripheral reference surface and/or mounting surface is cut on the inside of the wheel rim facing away from the wheel flange.

3. A method according to claim 1 or 2, **characterized in that** it starts with a forged wheel blank which has a uniform wheel rim thickness due to being rolled over its entire circumference.

## Revendications

1. Procédé de fabrication d'une roue de chemin de fer en acier, trempée sur sa surface de roulement, au moyen des étapes suivantes :
- La roue chauffée à la température de trempe, en position horizontale, avec le boudin vers le haut, tendue radialement par l'intérieur de là jante du côté opposé au boudin, est refroidie de façon contrôlée sur toute sa circonférence par un fluide pulvérisé sur sa surface de roulement depuis des buses fixes, tandis que la roue tourne par rapport à ces buses,
- Alors que la roue reste tendue du côté opposé au boudin, un épaulement de prise circonférentiel est usiné du côté du boudin à l'intérieur de la jante de la roue en rotation,
- La roue étant à présent tendue sur l'épaulement de prise côté boudin, la surface de roulement et d'autres surfaces de la roue le cas échéant sont usinées sur la roue en rotation.

2. Procédé selon la revendication 1, **caractérisé en ce que**, lors de la prise par l'épaulement de prise côté boudin, une surface circonférentielle de référence et/ou de montage est usinée à l'intérieur de la jante du côté opposé au boudin.

3. Procédé selon la revendication 1 ou 2, **caractérisé en ce que** l'on part d'une ébauche de roue forgée, à laquelle un laminage a conféré une épaisseur de jante constante sur toute la circonférence.
